# EUROPÄISCHE PATENTSCHRIFT

(11) **EP 1 865 516 B1**
(45) Veröffentlichungstag und Bekanntmachung des Hinweises auf die Patenterteilung: **10.04.2013**
(21) Anmeldenummer: 06290934.6
(22) Anmeldetag: 07.06.2006
(51) Int. Cl.: H01B 12/16

(54) **System mit einem supraleitfähigen Kabel**
System with a superconductive cable
Système avec câble supraconducteur

(43) Veröffentlichungstag der Anmeldung: 12.12.2007
(73) Patentinhaber: Nexans, 75008 Paris (FR)
(72) Erfinder: Allais, Arnaud, 22940 Saint Julien (FR); Schmidt, Frank, 30855 Langenhagen (DE)
(74) Vertreter: Döring, Roger

(56) Entgegenhaltungen:
- WO-A-03/052775

## Beschreibung

Die Erfindung bezieht sich auf System mit einem supraleitfähigen Kabel, das einen supraleitfähigen Leiter, ein denselben umgebendes Dielektrikum und einen über dem als Abstandshalter wirkenden Dielektrikum angeordneten supraleitfähigen Schirm aufweist, welches unter Einschluß eines Luftspalts von einem Kryostat umgeben ist, der aus einem metallischen Innenrohr, einem metallischen Außenrohr und einer zwischen denselben angeordneten Superisolierung besteht, bei welchem zwischen dem Kabel und dem Kryostat Raum zur Durchführung eines flüssigen Kühlmittels vorhanden ist (WO 03/052775).

Ein supraleitfähiges Kabel hat elektrische Leiter aus einem speziellen Material, das bei ausreichend tiefen Temperaturen in den supraleitfähigen Zustand übergeht. Der elektrische Widerstand eines entsprechend aufgebauten Leiters geht dadurch gegen Null. Geeignete Materialien sind beispielsweise YBCO (Yttrium-Barium-Kupfer-Oxid) oder BiSCCO (Wismut-Strontium-Kalzium-Kupfer-Oxid). Ausreichend niedrige Temperaturen für ein derartiges Material liegen beispielsweise zwischen 67 K und 110 K, um den supraleitfähigen Zustand zu erreichen. Geeignete Kühlmittel sind beispielsweise Stickstoff, Helium, Neon und Wasserstoff oder Gemische dieser Stoffe, jeweils in flüssigem Zustand.

Ein supraleitfähiges Kabel, bei welchem das Kühlmittel während des Betriebes auch in das Dielektrikum eindringt, wird als Kabel mit kaltem Dielektrikum bezeichnet. Es zeichnet sich dadurch aus, daß sehr hohe Leistungen im Hochspannungsbereich übertragen werden können. Ein solches Kabel besteht aus einem Innenleiter und einem konzentrisch dazu angeordneten Außenleiter, die durch ein Dielektrikum (Isolierung) voneinander getrennt und auf Abstand gehalten sind. Beide Leiter bestehen beispielsweise aus Bändern aus supraleitfähigem Material, wie YBCO oder BiSCCO, die dicht nebeneinander liegend mit langem Schlag um einen Träger herumgewickelt sind. Der Träger kann beim Innenleiter - im folgenden als "Leiter" bezeichnet - ein Rohr oder Strang oder Seil aus Metall sein. Für den Außenleiter - im folgenden als "Schirm" bezeichnet - dient das Dielektrikum als Träger. Das Dielektrikum besteht beispielsweise aus einer Vielzahl von Lagen aus Papier und/oder mit Polypropylen laminiertem Papier. Um das Kabel herum ist zur thermischen Isolierung und zur Vervollständigung des Systems unter Einschluß eines Luftspalts ein Kryostat angeordnet, der zwei ineinander liegende metallische Rohre aufweist, zwischen denen eine sogenannte Superisolierung angeordnet ist. Im Raum zwischen den beiden Rohren des Kryostats besteht ein Vakuum.

Bei dem bekannten System mit einem supraleitfähigen Kabel nach der eingangs erwähnten WO 03/052775 wird ein flüssiges Kühlmittel im Kryostat geführt. Es umspült und kühlt das Kabel. Das Kühlmittel dringt während der Inbetriebnahme des Systems nach und nach durch den Schirm des Kabels in dessen Dielektrikum ein. Es wirkt dabei auch als Imprägniermittel für das Dielektrikum. Der Druck des durch das System strömenden Kühlmittels nimmt mit zunehmender Entfernung vom Einspeisepunkt ab. Gleichzeitig steigt die Temperatur desselben an - ebenfalls mit zunehmender Entfernung vom Einspeisepunkt. Das kann dazu führen, daß die Verdampfungstemperatur des Kühlmittels erreicht wird, so daß dasselbe vom flüssigen in den gasförmigen Zustand übergeht. Dadurch bedingt kann es zur Schwächung der elektrischen Isoliereigenschaften des Dielektrikums kommen, was zu Durchschlagen zwischen Leiter und Schirm und damit zur Zerstörung des Kabels führen kann. Durch den geschilderten Effekt ist die Länge eines gefahrlos zu betreibenden Systems mit einem supraleitfähigen Kabels begrenzt.

Der Erfindung liegt die Aufgabe zugrunde, das eingangs geschilderte System so zu gestalten, daß seine Länge vergrößert werden kann, ohne daß Durchschläge zwischen Leiter und Schirm des Kabels zu befürchten sind.

Diese Aufgabe wird gemäß der Erfindung dadurch gelöst,
- daß über dem Schirm unter Freilassung eines Spaltes zum Kryostat ein metallisches Zwischenrohr angeordnet ist, das auf seiner ganzen Länge rundum geschlossen ist,
- daß in den Raum zwischen Leiter und Zwischenrohr ein mit konstantem Druck beaufschlagtes, bei Raumtemperatur fluides Medium als Imprägniermittel für das Dielektrikum eingebracht ist und
- daß an den Spalt zwischen Kryostat und Zwischenrohr mindestens ein Kühlmittelaggregat zum Zuführen des flüssigen Kühlmittels angeschlossen ist.

Bei einem derartigen Aufbau des Systems mit einem supraleitfähigen Kabel kann der Druck des als Imprägniermittel für das Dielektrikum dienenden Mediums auf großer Länge ausreichend hoch konstant gehalten werden. In Kühlmittel und Imprägniermittel steigt zwar mit zunehmender Entfernung vom Einspeisepunkt des Kühlmittels die Temperatur weiterhin an. Durch den konstanten Druck im Imprägniermittel werden dessen dielektrische Isoliereigenschaften aber so konstant gehalten, daß Durchschläge zwischen Leiter und Schirm nicht mehr auftreten. Wegen der Trennung von Kühlmittel und Imprägniermittel und Einbettung des Kabels in das Zwischenrohr sind die Drücke im Imprägniermittel und im Kühlmittel an jeder beliebigen Position des Systems unabhängig voneinander. Dadurch können die Grenzen für Druck und Temperatur des Kühlmittels erweitert und das Kabel und damit das System wesentlich länger als bisher ausgeführt werden, bevor gegebenenfalls eine Rückkühlung vorgenommen werden muß. Als bewegtes Kühlmittel kann gegebenenfalls außerdem ein kostengünstiges Material verwendet werden, da dessen dielektrische Isoliereigenschaften bei diesem System nicht von Bedeutung sind.

Für eine weitere Verlängerung eines mit dem Kabel ausgerüsteten Systems können außerdem zwei oder mehr Kühlaggregate entlang desselben angeschlossen werden, ohne Eingriff in das Kabel selbst und ohne Unterbrechung desselben.

Ein Ausführungsbeispiel des Erfindungsgegenstandes ist in den Zeichnungen dargestellt.

### Es zeigen:

Fig. 1 eine Seitenansicht des Systems nach der Erfindung mit absatzweise entfernten Schichten.

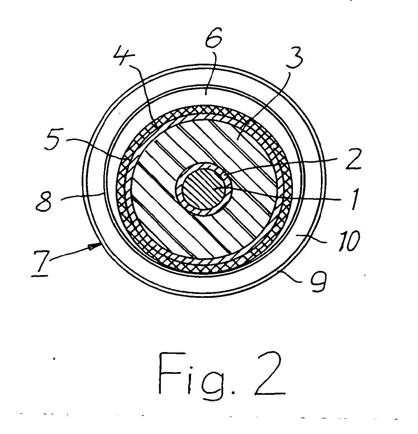

Fig. 2 einen Schnitt durch Fig. 1 längs der Linie II - II in vergrößerter Darstellung.

Mit 1 ist ein metallischer Träger bezeichnet, bei dem es sich beispielsweise um ein Kupferseil handelt. Der Träger 1 kann aber auch ein anders aufgebauter Strang oder ein Rohr sein. Um den Träger 1 herum ist ein supraleitfähiger Leiter 2 angeordnet, der mit Vorteil aus Bändern besteht, die mit großer Schlaglänge parallel zueinander und dicht aneinander liegend um den Träger 1 herumgewickelt sind. Der Leiter 2 ist von einem Dielektrikum 3 umgeben, das vorteilhaft aus einer Vielzahl von Lagen aus Papier und/oder mit Polypropylen laminiertem Papier besteht. Über dem Dielektrikum 3 ist ein supraleitfähiger Schirm 4 angeordnet. Er ist analog zum Leiter 2 aufgebaut. Seine Bänder sind um das als Träger wirkende Dielektrikum 3 herumgewickelt. Zum Leiter 2 und zum Schirm 4 gehören als separate Schichten sogenannte Leiterglättungen, welche an sich bekannt und der Übersichtlichkeit halber nicht mit dargestellt sind. Das gilt auch für mögliche andere Schichten zwischen Leiter 2 und Schirm 4.

Das aus den Elementen 1 bis 4 bestehende supraleitfähige Kabel ist auf seiner ganzen Länge von einem rundum geschlossenen, metallischen Zwischenrohr 5 umgeben. Über dem Zwischenrohr 5 ist unter Freilassung eines Spaltes 6 ein Kryostat 7 angeordnet, der aus einem metallischen Innenrohr 8, einem metallischen Außenrohr 9 und einer zwischen dessen beiden Rohren, die vorzugsweise konzentrisch zueinander angeordnet sind, angeordneten Superisolierung 10 besteht. Der Raum zwischen den beiden Rohren ist evakuiert.

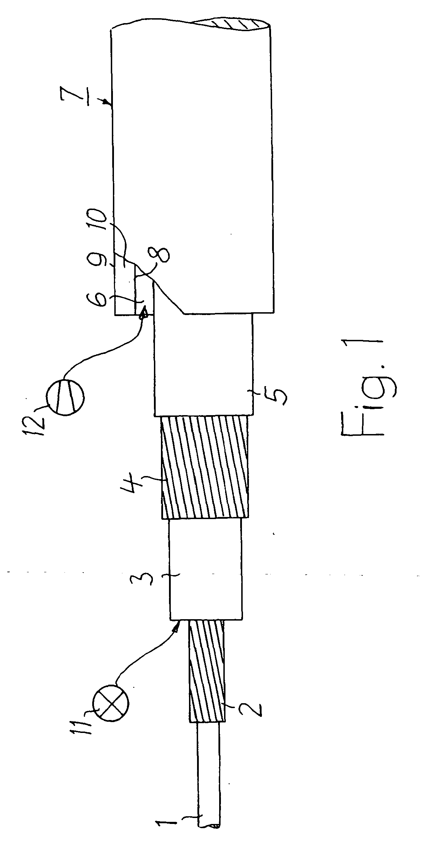

In den vom Zwischenrohr 5 umschlossenen Raum ist als Imprägniermittel ein bei Raumtemperatur fluides, vorzugsweise flüssiges Medium eingefüllt, das beispielsweise mittels zweier Ausgleichsgefäße 11 mit konstantem Druck beaufschlagt ist, die an den beiden Enden des Kabels angeordnet sind. Derartige Ausgleichsgefäße sind grundsätzlich bekannt. Das darin enthaltene flüssige Imprägniermittel wird mit unter hohem Druck stehendem Gas beaufschlagt. Zur Aufrechterhaltung des konstanten Drucks des Imprägniermittels kann das Zwischenrohr 5 auch an einem Ende verschlossen sein, so daß nur ein Ausgleichsgefäß 11 am offenen Ende desselben benötigt wird, so wie es in Fig. 1 eingezeichnet ist. Das Imprägniermittel soll gute elektrische Eigenschaften und eine Verdampfungstemperatur haben, die zumindest der des Kühlmittels entspricht. Sie ist mit Vorteil höher als die Verdampfungstemperatur des Kühlmittels. Geeignete Materialien für das Imprägniermittel sind beispielsweise Stickstoff und Öl.

Als bei Raumtemperatur fluides Medium kann auch ein Gas, beispielsweise SF6, eingesetzt werden, das bei Betriebstemperatur des Kabels bzw. des Systems flüssig oder fest ist. Für ein solches Medium gilt das gleiche, wie es im Vorangehenden für ein flüssiges Medium beschrieben ist.

Durch den Spalt 6 zwischen Innenrohr 5 und Kryostat 7 wird ein flüssiges Kühlmittel gepumpt, und zwar mittels eines durch eine Pumpe 12 angedeuteten Kühlaggregates. Es können bei einem längeren System zum Rückkühlen des Kühlmittels auch zwei oder mehr Kühlaggregate eingesetzt werden. Durch das Kühlaggregat bzw. die Kühlaggregate werden die erforderliche Temperatur und der erforderliche Druck des Kühlmittels im Spalt zwischen Kryostat 7 und Zwischenrohr 5 aufrechterhalten, ohne daß in das Kabel selbst eingegriffen wird.

Das Zwischenrohr 5 kann als Glattrohr oder als Wellrohr mit einer quer zu seiner Längsrichtung verlaufenden Wellung ausgeführt sein. Es kann direkt am Schirm 4 anliegen. Zwischen Schirm 4 und Zwischenrohr 5 kann aber auch eine Trennschicht angebracht sein. Das Zwischenrohr 5 besteht mit Vorteil aus Invarstahl, so daß seine Länge sich bei Temperaturänderungen nicht wesentlich ändert.

## Patentansprüche

1. System mit einem supraleitfähigen Kabel, das einen supraleitfähigen Leiter (2), ein denselben umgebendes Dielektnkum (3) und einen über dem als Abstandshalter wirkenden Dielektrikum (3) angeordneten supraleitfähigen Schirm (4) aufweist, welches unter Einschluß eines Luftspalts von einem Kryostat (1) umgeben ist, der aus einem metallischen Innenrohr (8), einem metallischen Außenrohr (9) und einer zwischen denselben angeordneten Superisolierung (10) besteht, bei welchem zwischen dem Kabel und dem Kryostat (7) Raum zur Durchführung eines flüssigen Kühlmittels vorhanden ist, **dadurch gekennzeichnet,**
- **daß** über dem Schirm (4) unter Freilassung eines Spaltes (6) zum Kryostat (7) ein metallisches Zwischenrohr (5) angeordnet ist, das auf seiner ganzen Länge rundum geschlossen ist,
- **daß** in den Raum zwischen Leiter (2) und Zwischenrohr (5) ein mit konstantem Druck beaufschlagtes, bei Raumtemperatur fluides Medium als Imprägniermittel für das Dielektrikum (3) eingebracht ist und
- **daß** an den Spalt (6) zwischen Kryostat (7) und Zwischenrohr (5) mindestens ein Kühlmittelaggregat zum Zuführen des flüssigen Kühlmittels angeschlossen ist.

2. System nach Anspruch 1, **dadurch gekennzeichnet, daß** das Zwischenrohr (5) aus Invarstahl besteht.

3. System nach Anspruch 1 oder 2, **dadurch gekennzeichnet, daß** das Zwischenrohr (5) ein Glattrohr ist.

4. System nach Anspruch 1 oder 2, **dadurch gekennzeichnet, daß** das Zwischenrohr (5) ein Wellrohr ist, mit einer quer zu seiner Längsrichtung verlaufenden Wellung.

## Claims

1. System having a superconductive cable, which comprises a superconductive conductor (2), a dielectric (3) surrounding the same and a superconductive screen (4) which is arranged over the dielectric (3) acting as a spacer, and which is surrounded together with an air gap by a cryostat (7) which consists of a metal inner tube (8), a metal outer tube (9) and a superinsulation (10) arranged between them, wherein a space for guiding a liquid cooling medium is provided between the cable and the cryostat (7), **characterized in**
- **that** an intermediate metal tube (5), which is closed completely over its entire length, is arranged around the screen (4) leaving a gap (6) to the cryostat (7),
- **that** a medium which is fluid at room temperature is introduced as an impregnating medium for the dielectric (3) into the space between the conductor (2) and the intermediate tube (5), with constant pressure, and
- **that** at least one unit with a cooling medium for supplying the liquid cooling medium is connected to the gap (6) between the cryostat (7) and the intermediate tube (5).

2. System according to claim 1, **characterized in that** the intermediate tube (5) consists of Invar steel.

3. System according to claim 1 or 2, **characterized in that** the intermediate tube (5) is a smooth tube.

4. System according to claim 1 or 2, **characterized in that** the intermediate tube (5) is a corrugated tube, with corrugation extending transversely to its longitudinal direction.

## Revendications

1. Système comprenant un câble supraconducteur qui présente un conducteur supraconducteur (2), un diélectrique (3) l'entourant et un blindage (4) supraconducteur disposé sur le diélectrique (3) agissant en tant qu'élément d'espacement, lequel blindage est entouré par un cryostat (7) en incluant un entrefer, le cryostat se composant d'un tube intérieur (8) métallique, d'un tube extérieur (9) métallique et d'une superisolation (10) disposée entre eux, un espace étant prévu entre le câble et le cryostat (7) pour le passage d'un fluide de refroidissement liquide, **caractérisé en ce**
- **que** un tube intermédiaire métallique (5) est disposé sur le blindage (4) en laissant un interstice (6) par rapport au cryostat (7), le tube intermédiaire étant fermé tout autour sur toute sa longueur,
- **que** dans l'espace entre le conducteur (2) et le tube intermédiaire (5) est introduit un fluide liquide à température ambiante, sollicité avec une pression constante, servant de milieu d'imprégnation pour le diélectrique (3) et
- **que** au niveau de l'interstice (6) entre le cryostat (7) et le tube intermédiaire (5), au moins une unité de fluide de refroidissement est raccordée en vue de l'alimentation en fluide de refroidissement liquide.

2. Système selon la revendication 1, **caractérisé en ce que** le tube intermédiaire (5) se compose d'acier invar.

3. Système selon la revendication 1 ou 2, **caractérisé en ce que** le tube intermédiaire (5) est un tube lisse.

4. Système selon la revendication 1 ou 2, **caractérisé en ce que** le tube intermédiaire (5) est un tube ondulé, avec une ondulation s'étendant transversale à sa direction longitudinale.
